# FASCICULE DE BREVET EUROPEEN

(11) **EP 4 556 687 B1**
(45) Date de publication et mention de la délivrance du brevet: **24.06.2026**
(21) Numéro de dépôt: 23306967.3
(22) Date de dépôt: 14.11.2023
(51) Int. Cl.: F01D 17/16, F01D 25/02

(54) **ENSEMBLE DE TURBOMACHINE COMPRENANT UNE AUBE DE STATOR À CALAGE VARIABLE ÉQUIPÉE D'UN ÉLÉMENT CHAUFFANT, ET TURBOMACHINE**
TURBOMASCHINENANORDNUNG UMFASSEND EINE VERSTELLBARE MIT EINEM HEIZELEMENT AUSGESTATTETE STATORSCHAUFEL, UND TURBOMASCHINE
TURBOMACHINE ASSEMBLY COMPRISING A VARIABLE STATOR VANE EQUIPPED WITH A HEATING ELEMENT, AND TURBOMACHINE

(43) Date de publication de la demande: 21.05.2025
(73) Titulaire: Safran Aero Boosters, 4041 Herstal (BE); SAFRAN AIRCRAFT ENGINES, 75015 Paris (FR)
(72) Inventeur: GALLET, Julien Philippe, 4041 HERSTAL (BE); BASSO, Francesco Saverio, 75015 PARIS (FR); LAFONTAINE, Pierre, 4041 HERSTAL (BE)
(74) Mandataire: Gevers & Orès

(56) Documents cités:
- FR-A1- 2 941 998
- GB-A- 2 403 778
- US-A- 4 856 962

## Description

### Domaine technique de l'invention

La présente invention concerne le domaine aéronautique, notamment la propulsion d'aéronef. Elle vise en particulier un ensemble de turbomachine comprenant une aube de stator à calage variable équipée d'un élément chauffant.

### Arrière-plan technologique

De nombreuses turbomachines, telles des turboréacteurs ou des turbopropulseurs, sont équipées d'aubes de stator à calage variable. Les aubes de stator à calage variable sont disposées autour de l'axe longitudinal de la turbomachine et sont placées généralement en amont ou en aval d'aubes rotoriques, suivant la circulation des gaz dans la turbomachine, afin d'orienter le flux d'air en sortie ou vers ces aubes rotoriques dans le bon angle. Le calage leur permet de s'adapter à divers régimes de la turbomachine. A cet effet, les aubes de stator à calage variable sont reliées à un système de changement de pas qui est configuré de manière à faire varier les calages ou inclinaisons de celles-ci autour de leur axe de calage pendant un vol.

Les aubes de stator peuvent équiper un compresseur de la turbomachine. Le système de changement de pas comprend un anneau de commande centré sur l'axe longitudinal et plusieurs leviers qui sont reliés chacun à un pivot d'une aube de stator et à l'anneau de commande. Chaque pivot est monté dans un logement correspondant d'un carter de la turbomachine à l'aide de douilles.

Les aubes de stator peuvent être soumises à la formation de givre qui peut altérer leur fonctionnement et ainsi dégrader les performances de la turbomachine. Dans ce cas, les aubes de stator à calage variable ont été équipées d'éléments chauffants ayant une portion intégrée dans chaque pale des aubes de stator. Chaque élément chauffant est relié à un câble d'alimentation qui s'étend à l'extérieur de la pale au niveau de l'extrémité externe du pivot et qui est relié à un dispositif de connexion électrique situé, à l'extérieur de l'aube de stator, dans une zone à proximité du système de changement de pas.

Les câbles d'alimentation présentent un surplus de longueur pour suivre le mouvement de rotation des aubes de stator lors du changement de calage, mais qui peut interagir avec le système de changement de pas. Le dispositif de connexion électrique peut également se mouvoir lors de la rotation des aubes de stator. Des espaceurs ont été envisagés pour éviter les interactions, cependant il en résulte un encombrement important dans une zone déjà contrainte en termes d'espace disponible. En dépit de cela, une sollicitation et une déformation mécaniques des câbles d'alimentation entre les éléments chauffants en repère mobile, et le dispositif de connexion électrique en repère fixe, sont inévitables. Cela impacte négativement la durabilité et la fiabilité des éléments chauffants.

Par ailleurs, l'assemblage électrique des éléments chauffants et le dispositif de connexion électrique est difficile à mettre en oeuvre de manière fiable une fois que les aubes de stator sont déjà installées dans la turbomachine à cause de l'espace restreint. Le montage du système de changement de pas et le réglage du calage des aubes de stator impliquent la réalisation de plusieurs opérations de serrage et/ou desserrage de pièces lesquelles nécessitent la sollicitation des câbles d'alimentation pouvant affecter leurs tenues mécaniques ainsi que celles de connecteurs électriques, de la fixation entre l'élément chauffant et le dispositif de connexion électrique ou de l'élément chauffant lui-même. Les éléments chauffants comprennent sur une partie de leur longueur une gaine isolante qui est rigide, fragile et sensible aux sollicitations mécaniques répétées ou extrêmes qui peuvent engendrer une rupture de ceux-ci. Les câbles d'alimentation des éléments chauffants comprennent généralement un isolant électrique qui est plus souple et présentent une meilleure résistance aux sollicitations répétées que les éléments chauffants. Le montage est également complexe, car les câbles d'alimentation doivent traverser les douilles et les logements respectifs du carter de la turbomachine avant que les pivots ne soient engagés dans leurs logements.

A cela s'ajoute le fait que le transfert de chaleur des câbles d'alimentation des éléments chauffants vers l'extérieur est limité de par leurs expositions à l'air libre, le manque de refroidissement de leurs parties à l'air libre est un facteur limitant pour la puissance électrique circulant dans les câbles d'alimentation et diminue la densité de puissance qu'il est possible d'intégrer.

Le document GB-A-2403778 décrit une turbomachine comprenant des aubes de stator à calage variable qui sont équipées d'éléments chauffants. Les éléments chauffants comprennent une première partie qui est intégrée dans la pale et une deuxième partie, reliée à la première partie, qui présente une importante longueur et qui s'étend dans des passages formés dans la pale. Les passages sont agencés radialement en-dessous du pivot de la pale. La deuxième partie de l'élément chauffant traverse un boîtier de connexion logé dans le pivot de la pale et s'étend à l'extérieur de la pale vers une source d'alimentation. L'agencement de cet élément chauffant est complexe étant donné le surplus de longueur qui doit être manipulé et disposé dans les différents passages et cavité. La deuxième partie de l'élément chauffant est également sujet à diverses sollicitations mécaniques lors du calage de l'aube de stator.

Il existe un besoin de résoudre tout ou partie des inconvénients précités.

### Résumé de l'invention

L'objectif de la présente invention est de fournir une solution simple, robuste et économique permettant de réduire, voire de supprimer les sollicitations mécaniques des moyens d'alimentation des moyens chauffants d'une aube de stator à calage variable en vue d'éviter la formation de givre, tout en permettant un calage de celle-ci.

Nous parvenons à cet objectif conformément à l'invention grâce à un ensemble de turbomachine d'axe longitudinal, en particulier d'aéronef, comprenant :
- une aube de stator à calage variable comportant une pale et un pivot s'étendant radialement depuis une extrémité de la pale, le pivot comprenant un alésage principal,
- un système de changement de pas configuré de manière à changer le calage de l'aube de stator autour de son axe de calage, et
- un élément chauffant comprenant une première portion montée au sein de la pale et une deuxième portion, s'étendant à l'extérieur de la pale, reliée à un dispositif de connexion électrique,
le pivot comprenant un perçage qui traverse la paroi du pivot de manière à déboucher d'une part dans l'alésage principal et d'autre part sur une surface externe du pivot, et une rainure radiale ménagée dans la paroi du pivot qui débouche sur la surface externe et dans une sortie du perçage, la deuxième portion prolongeant la première portion et la deuxième portion s'étendant dans l'alésage principal, dans le perçage puis dans la rainure radiale vers le dispositif de connexion électrique.

Ainsi, cette solution permet d'atteindre l'objectif susmentionné. L'agencement d'une partie de la deuxième portion à l'intérieur du pivot et à l'extérieur du pivot permet de réduire la longueur de celle-ci et les interactions avec le système de changement de pas. Les sollicitations mécaniques sont reportées sur d'autres éléments plus robustes du dispositif de connexion électrique. La réduction de la longueur de la deuxième portion permet d'obtenir un gain en masse et de réduire les coûts de fabrication. L'encombrement est également amélioré puisque la deuxième portion à l'extérieur du pivot est disposée au plus près du diamètre du pivot en étant montée dans la rainure. Le montage et démontage sont plus simples également, car il n'y a pas de pliages répétés de la deuxième portion de l'élément chauffant plus courte pour installer l'aube de stator dans le carter de turbomachine et pour relier l'aube de stator au système de changement de pas. La durée de vie et la fiabilité de l'élément chauffant sont améliorées ainsi que celles du dispositif de connexion électrique. La configuration du perçage et de l'alésage central est une solution simple et peu coûteuse. Par ailleurs, la liaison entre le pivot de l'aube de stator et le système de changement de pas peut être simplifiée tout en étant robuste, ce qui fiabilise le changement de calage de l'aube.

L'ensemble de turbomachine comprend également l'une ou plusieurs des caractéristiques prises seules ou en combinaison les unes avec les autres :
- le dispositif de connexion électrique comprend au moins un boîtier de connexion et au moins harnais qui est couplé à la première portion de l'élément chauffant via le boîtier de connexion et à une source d'alimentation électrique, le harnais s'étendant à l'extérieur du pivot.
- le système de changement de pas comprend un anneau de commande et au moins un levier qui est solidarisé à une extrémité radialement externe du pivot au moyen d'au moins un organe de fixation et relié à l'anneau de commande qui est destiné à être déplacé en rotation autour de l'axe longitudinal et à entraîner le changement de calage des aubes de stator.
- l'ensemble comprend un organe de support solidaire en rotation du levier et qui est configuré de manière à porter et retenir le boîtier de connexion.
- l'organe de support est fixé sur le levier avec le même organe de fixation.
- le levier comprend une gorge traversant sa paroi de part et d'autre radialement au niveau de sa première extrémité et qui est destinée à recevoir au moins en partie la deuxième portion de l'élément chauffant.
- l'ensemble comprend une douille cylindrique pourvue d'un alésage destiné à être traversé par le pivot, la deuxième portion de l'élément chauffant cheminant au-dessus radialement de la douille cylindrique.
- l'ensemble comprend une douille cylindrique pourvue d'un alésage destiné à être traversé par le pivot, la deuxième portion de l'élément chauffant cheminant entre la douille cylindrique et le pivot.
- l'ensemble comprend une pluralité d'aubes de stator à calage variable disposées autour de l'axe longitudinal, chacun des pivots étant reliés à l'anneau de commande, et en ce que le dispositif de connexion comprenant plusieurs boîtiers de connexion reliant électriquement chacun une deuxième portion d'un élément chauffant et au moins deux harnais, chaque harnais étant relié à un autre harnais d'un des boîtiers de connexion via un connecteur.
   - - l'alésage principal s'étendant coaxialement à l'axe de calage des aubes de stator.
   - - l'alésage principal s'étendant de manière inclinée par rapport à l'axe radial.
   - - l'alésage principal s'étendant parallèlement à l'axe de calage.

L'invention concerne une turbomachine, en particulier d'aéronef, comprenant au moins un module de turbomachine présentant l'une quelconque des caractéristiques susmentionnées.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
- La figure 1 est une vue en perspective et partielle d'une rangée annulaire d'aubes de stator à calage variable selon l'invention ;
- La figure 2 est une vue en perspective d'aubes de stator reliées à un système de changement de pas et équipées de moyens de dégivrage selon l'invention ;
- La figure 3 est une vue en coupe axiale d'un exemple d'aube de stator à calage variable équipée de moyens de dégivrage selon l'invention ;
- La figure 4 est une vue en coupe d'un autre mode de réalisation d'une aube de stator équipée de moyens de dégivrage selon l'invention ;
- La figure 5 illustre un exemple de réalisation d'un élément de liaison entre une aube de stator à calage variable et un élément de commande selon l'invention.

### Description détaillée de l'invention

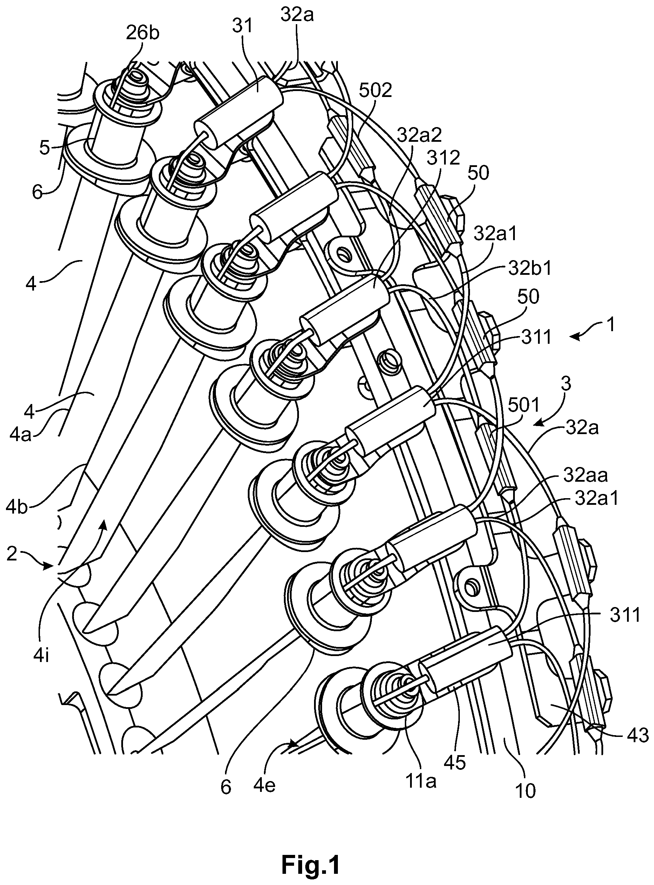

La figure 1 représente un ensemble pour une turbomachine 1 d'axe longitudinal X. La turbomachine est destinée à être montée sur un aéronef et peut être un turbomoteur, un turboréacteur, une turbosoufflante, ou encore comprendre des aubes mobiles de soufflante ou des aubes mobiles d'au moins une hélice qui soient carénées ou non carénées.

L'ensemble de turbomachine 1 comprend au moins une aube de stator 2 à calage variable qui est reliée à un système de changement de pas 3. Dans le présent exemple, plusieurs aubes de stator 2 sont réparties autour de l'axe longitudinal X. Le système de changement de pas 3 est configuré pour changer le calage d'au moins une aube de stator 2 en fonction du mode de fonctionnement de la turbomachine.

Dans la présente invention, nous entendons par le terme « aube de stator » ou « aube fixe », une aube qui n'est pas entraînée en rotation autour de l'axe longitudinal X de la turbomachine. En d'autres termes, l'aube de stator est distincte et contraire à une aube rotorique ou mobile de la turbomachine. Les aubes de stator et les aubes rotoriques sont agencées de manière générale sous forme de rangée annulaire et les rangées annulaires d'aubes de stator sont disposées en amont et/ou en aval des rangées annulaires d'aubes rotoriques suivant l'axe longitudinal X.

Dans la présente invention, et de manière générale, les termes « amont » et « aval » sont définis par rapport à la circulation des gaz ou des flux d'air dans la turbomachine et ici suivant l'axe longitudinal X. Les termes « axial » et « axialement » sont définis par rapport à l'axe longitudinal X. Les termes « externe », « extérieur », « intérieur », « interne » et « radial » sont définis par rapport à un axe radial Z qui s'étend depuis l'axe longitudinal X et au regard de l'éloignement par rapport à l'axe longitudinal X. L'axe radial est perpendiculaire à l'axe longitudinal X.

Dans cet exemple de réalisation, les aubes de stator 2 à calage variable sont de préférence montées dans un compresseur (non représenté) ou ensemble de compresseur de la turbomachine et sont connues sous le terme de « redresseur » ou de l'acronyme anglais « VSV » pour « Variable Stator Vane ». Les aubes de stator 2 permettent de redresser le flux d'air qui les traverse.

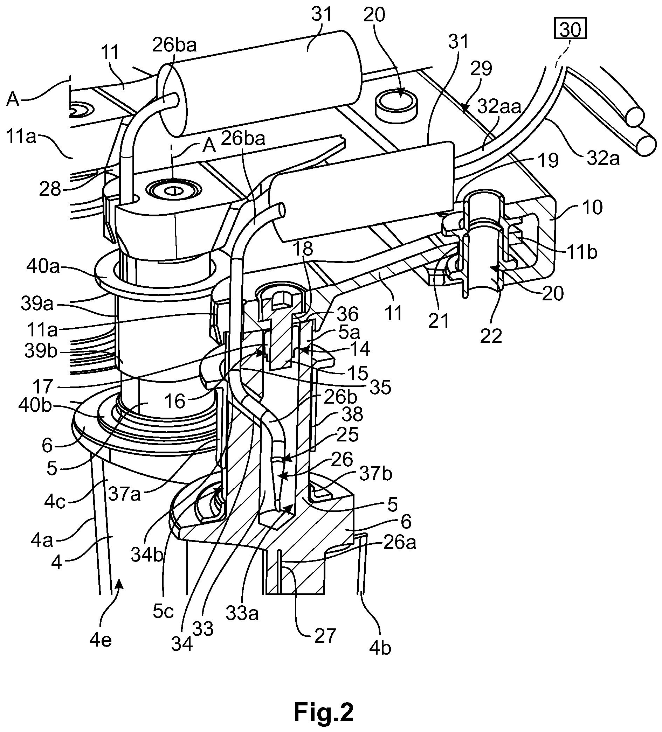

En référence à la figure 2, chaque aube de stator 2 comprend une pale 4 qui s'étend radialement. Chaque pale 4 comprend un bord d'attaque 4a et un bord de fuite 4b qui sont reliés par une surface extrados 4e et une surface intrados 4i (cf. figure 1).

Chaque aube de stator 2 comprend un pivot 5 qui s'étend radialement depuis une extrémité 4c de la pale 4. Le pivot 5 est monté pivotant autour d'un axe de calage A. L'axe de calage A s'étend sensiblement parallèlement à l'axe radial Z. L'axe de calage A peut présenter une inclinaison par rapport à l'axe radial Z.

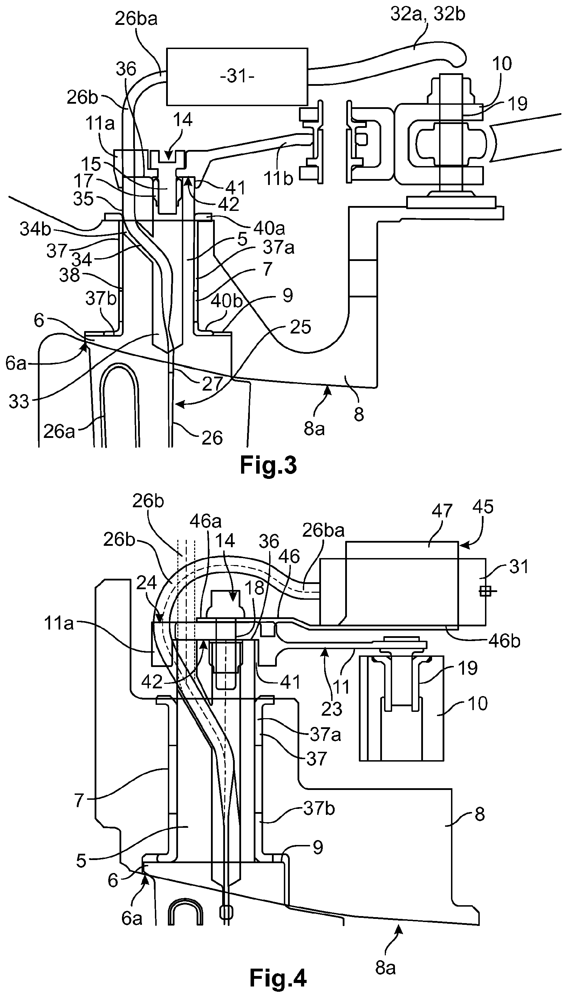

La pale 4 et le pivot 5 sont reliés par une platine 6 laquelle peut être optionnelle. De manière avantageuse, le pivot 5 est monté dans un logement 7 correspondant d'un carter externe 8 de la turbomachine. Le carter externe 8 est avantageusement centré sur l'axe longitudinal X. Le carter peut être formé d'au moins deux secteurs autour de l'axe longitudinal (coupés selon le plan XZ et assemblés par exemple par des liaisons boulonnées longitudinales) ou être formé d'une seule pièce annulaire. La platine 6 présente une forme circulaire et est destinée à être logée dans un évidement 9 (visible sur la figure 3) du carter externe 8 de sorte que sa surface interne 6a soit affleurante avec une surface interne 8a du carter externe 8. Cependant, la platine 8 pourrait présenter une autre forme qui n'entrave pas la rotation de l'aube et son agencement par rapport au carter externe 8.

Avantageusement, chaque pivot 5 est relié à un anneau de commande 10 par l'intermédiaire d'un levier 11. Le levier 11 et l'anneau de commande 10 font partie du système de changement de pas 3. L'anneau de commande 10 est destiné à être déplacé en rotation autour de l'axe longitudinal X et à entraîner le changement de calage des aubes de stator 2. La rotation de l'anneau de commande 10 est commandée par exemple par un moyen de commande (non représenté) du système de changement de pas 3. Le moyen de commande est de manière optionnelle un actionneur. Dans le présent exemple de réalisation, il y a au moins un levier 11 pour chaque aube de stator 2 et un unique anneau de commande 10 pour l'ensemble des aubes de stator 2.

Chaque levier 11 s'étend entre une première extrémité 11a et une deuxième extrémité 11b. La première extrémité 11a est solidarisée à une extrémité radialement externe 5a (extrémité libre) d'un pivot 5. A cet effet, la fixation est réalisée au moyen d'au moins un organe de fixation 14. Chaque organe de fixation 14 comprend par exemple, une tige filetée 15 coopérant avec un filetage 16 agencé au niveau de l'extrémité radialement externe 5a. Le filetage 16 peut être porté par une douille filettée17. La première extrémité 11a de chaque levier 11 est percée par exemple d'un premier trou 18 traversant radialement de part et d'autre la paroi du levier 11 et qui est traversé par la tige filetée 15. La deuxième extrémité 11b est solidarisée à l'anneau de commande 10.

L'anneau de commande 10 est centré sur l'axe longitudinal X. L'anneau de commande 10 comprend par exemple plusieurs orifices radiaux 19 qui sont destinés chacun à coopérer avec des éléments de fixation 20. La deuxième extrémité 11b de chaque levier 11 est également percé d'un deuxième trou 21 coopérant avec les éléments de fixation 20. Les éléments de fixation 20 comprennent par exemple un pion cylindrique 22 qui traverse à la fois le deuxième trou 21 et l'orifice radial 19 correspondant. Chaque levier 11 est apte à pivoter autour de l'axe du pion cylindrique 22.

Chaque aube de stator 2 est équipée de moyens de dégivrage 25 permettant de dégivrer et/ou d'éviter la formation de givre. Les moyens de dégivrage 25 comprennent dans le présent exemple au moins un élément chauffant 26, de préférence électrique.

En référence à la figure 3, chaque élément chauffant 26 comprend avantageusement une première portion 26a qui est montée au sein de la pale 4. La pale 4 peut comprendre une cavité interne 27 qui s'étend radialement et dans laquelle est logée la première portion 26a. Cette dernière s'étend avantageusement sur toute la hauteur radiale de la pale 4 de manière à chauffer toute la pale 4. Suivant un exemple de réalisation, la cavité interne 27 présente une forme de serpentin ou de trombone dans laquelle est agencée la première portion 26a. Un courant électrique circulant dans la deuxième portion 26b permet d'élever la température dans la pale 4 ce qui permet d'éviter la formation de givre. La première portion 26a présente une épaisseur transversale comprise à titre d'exemple entre 0,1 mm et 10 mm. La première portion 26a se présente comme un fil chauffant.

Chaque élément chauffant 26 comprend une deuxième portion 26b qui s'étend au moins en partie à l'extérieur de la pale 4. De manière avantageuse, la deuxième portion 26b est un prolongement de la première portion 26a. La deuxième portion 26b est avantageusement, mais non limitativement, revêtue d'un matériau conducteur électrique 28 de manière à transmettre efficacement la chaleur générée dans cette deuxième portion 26b de l'élément chauffant 26 et d'éviter une montée en température.. Le matériau conducteur électrique 28 est disposé de telle sorte à augmenter le diamètre ou section transversale de l'élément chauffant 26 depuis la jonction avec la première portion 26a jusqu'à une extrémité 26ba opposée de la deuxième portion 26b. Chaque deuxième portion 26b est considérée comme étant la partie froide de l'élément chauffant 26 et chaque première portion 26a est considérée comme étant la partie chaude de l'élément chauffant 26.

A titre d'exemple, le diamètre de la deuxième portion 26b peut être comprise entre 0,3 mm et 10 mm, de préférence 3 mm. Le matériau conducteur électrique 28 peut être de la magnésie. Cette dernière se présente sous la forme d'une poudre qui est compactée et appliquée pour former le matériau conducteur électrique et l'isolation de l'élément chauffant.

L'élément chauffant 26 est relié à un dispositif de connexion électrique 29. En particulier, le dispositif de connexion 29 comprend une source d'alimentation électrique 30 qui peut être une batterie ou une machine électrique ou encore un alternateur (qui fonctionne grâce à la turbomachine). Le dispositif d'alimentation de connexion 29 comprend au moins un boîtier de connexion 31 configuré pour protéger la fixation entre la deuxième portion et un harnais d'alimentation décrit ci-après. La fixation peut être réalisée par une soudure par exemple. Dans le présent exemple, chaque deuxième portion 26b est couplée à un boîtier de connexion 31. En d'autres termes, il y a autant de boîtiers de connexion 31 que d'aubes de stator 2. Les boîtiers de connexion 31 sont situés à l'extérieur des aubes de stator 2. Suivant un agencement optionnel, la deuxième portion 26b de chaque élément chauffant 26 (en particulier son extrémité) est frettée sur le boîtier de connexion 21.

Suivant un exemple de réalisation, chaque boîtier de connexion 31 est de forme cylindrique, de préférence droite, et comprend une enveloppe extérieure réalisée par exemple dans un matériau métallique. L'enveloppe protège la fixation entre l'élément chauffant 26 et les câbles ou harnais d'alimentation. Le boîtier de connexion 31 comprend un matériau de comblement, par exemple de la magnésie (qui est sous forme de poudre compactée) qui remplit l'intérieur de l'enveloppe et protège les portions de câble, d'éléments chauffant et la fixation. Le matériau de comblement peut comprendre de la résine disposée aux extrémités de chaque boîtier de connexion 31.

Chaque boîtier de connexion 31 est couplée à au moins un harnais 32a, 32b dans lesquels circule le courant électrique. Le harnais est à cet effet couplé à la source d'alimentation 30. De préférence, il y a deux harnais d'alimentation 32a, 32b qui comprennent chacun une première extrémité 32aa couplée à la deuxième extrémité 26ba de la deuxième portion 26b d'un élément chauffant 26 dans le même boîtier de connexion 31. Chaque harnais d'alimentation 32a, 32b présente une section transversale qui est supérieure à une section transversale de l'élément chauffant 26, et en particulier de la deuxième portion 26b. Les harnais sont « pliés » sur des rayons plus longs. En effet, chaque harnais d'alimentation 32a, 32b comprend une gaine de protection qui apporte de la rigidité aux harnais. En effet, chaque harnais comprend par exemple en son sein un élément conducteur enveloppé par des couches métalliques qui forment la gaine de protection. Les couches métalliques se comportent comme un renfort mécanique (empêche le conducteur au centre d'être trop sollicité) et contre un blindage contre les décharges électriques (fuite de courant). A titre d'exemple, le diamètre ou section transversale de chaque harnais d'alimentation 32a, 32b est égale à au moins deux fois le diamètre du diamètre maximal de l'élément chauffant.

Sur les figures 1 et 2, chaque couple de harnais 32a, 32b s'étend à l'extérieur de l'aube de stator 2. Chaque harnais 32a, 32b est également relié à un autre harnais d'un des autres boîtiers de connexion 31 via un connecteur 50. En particulier, la deuxième extrémité d'un premier harnais 32a1 couplé à un premier boîtier de connexion 311 est accouplée à un premier connecteur 501. La deuxième extrémité d'un deuxième harnais 32b1 couplé à un deuxième boîtier de connexion 312 est accouplée au même premier connecteur 501. Un troisième harnais 32a2 couplé au deuxième boîtier de connexion 312 est relié à un deuxième connecteur 502 accouplé à un quatrième harnais couplé à un troisième boîtier de connexion, et ainsi de suite. Les harnais de deux aubes de stator 2 adjacentes sont reliés par un connecteur. Toutefois, les aubes de stator 2 adjacentes ne sont pas forcément connectées les unes aux autres. De manière générale, les aubes de stator sont connectées les unes aux autres en série ou en boucle. En connectant les aubes de stator en série (par exemple, aube de stator i connectée à l'aube de stator i+3), et en cas de panne sur une des boucles, la formation de masse de glace sur une partie importante de la grille d'aubes de stator 2 est évitée. Chaque aube de stator 2 en panne/ « non anti-givrée » sera entourée de deux aubes de stator « antigivrées (avec les éléments chauffants qui fonctionnent) ».

Avantageusement, chaque connecteur 50 comprend une partie mâle et une partie femelle lesquelles comprennent des moyens d'accouplement complémentaire. De manière alternative, chaque connecteur 50 est une unique pièce.

Suivant un exemple de réalisation, l'ensemble peut comprendre un anneau de support 43 (visible sur la figure 1) qui est destiné à supporter le ou les connecteurs 50 et les harnais d'alimentation 32a, 32b. L'anneau de support 43 peut être centré sur l'axe longitudinal. Il est réalisé d'une seule pièce, mais pourrait être sectorisé.

Chaque pivot 5 comprend un alésage principal 33 qui s'étend radialement à l'intérieur de celui-ci. Dans le présent exemple, chaque alésage principal 33 comprend un axe coaxial à l'axe de calage A de l'aube. Alternativement, l'axe de chaque alésage principal 33 peut être incliné par rapport à l'axe de calage A ou encore être parallèle à l'axe de calage A. La configuration de l'alésage principal dépendra par exemple de plusieurs éléments de conception et/ou de la fixation du système de changement de pas. De manière avantageuse, mais non limitativement, l'alésage principal 33 débouche à l'extrémité radialement externe 5a de chaque pivot 5. L'alésage principal 33 présente ici une section radiale circulaire qui n'est pas limitative. L'alésage principal 33 débouche également dans cet exemple dans la cavité interne 27 ménagée dans la pale 4, ce qui permet le cheminement de l'élément chauffant 26 dans et à l'extérieur de la pale 4.

Dans le présent exemple, chaque douille filetée 17 est destinée à se visser sur la tige filetée 15 et est sertie à la face interne 33a de l'alésage principal 33. La tige filetée 15 s'étend au moins en partie dans l'alésage principal 33 ainsi que la douille filetée 17.

Comme cela est illustré sur la figure 2, chaque pivot 5 comprend un perçage 34 qui traverse la paroi du pivot 5. Chaque perçage 34 débouche par exemple d'une part, dans l'alésage principal 33 et d'autre part, sur une surface externe 5c du pivot 5. Avantageusement, mais non limitativement, chaque perçage 34 présente un axe qui est incliné par rapport à l'axe radial ou l'axe de l'alésage principal 33. L'angle d'inclinaison est par exemple compris entre 25° et 70° par rapport à l'axe radial Z. De la sorte, la deuxième portion 26b de l'élément chauffant 26 chemine dans une partie de l'alésage principal 33 puis est orientée vers le perçage 34. En sortie du perçage 34, la deuxième portion 26b est orientée vers l'extrémité radialement externe 5a du pivot 5. La deuxième portion 26b récupère rapidement une direction radiale et cela permet de limiter l'encombrement radial de celle-ci tout en respectant le rayon de courbure minimal acceptable par la deuxième portion 26b de l'élément chauffant 26. Cette configuration permet également de contourner l'organe de fixation 14 qui occupe une partie de l'alésage principal 33. Par ailleurs, le cheminement d'au moins une partie de la deuxième portion 26b de l'élément chauffant 26 à l'extérieur du pivot 5 et non dans le centre du pivot 5 permet de faciliter la fixation du levier 11 sur l'extrémité radialement externe 5a du pivot 5.

Chaque pivot 5 comprend avantageusement une rainure radiale 35 qui est ménagée dans la paroi du pivot 5. Chaque rainure radiale 35 débouche sur la surface externe 5c du pivot 5. Chaque rainure radiale 35 présente une section radiale sensiblement en forme de U, C. Les rainures radiales 35 débouchent chacune au niveau d'une sortie 34b des perçages 34. Avantageusement, chaque rainure radiale 35 débouche au niveau de l'extrémité radialement externe 5a du pivot 5 et de préférence sur une bordure 36 de l'extrémité radialement externe. Une portion de chaque deuxième portion 26b est logée et guidée dans la rainure radiale 35. Le cheminement de la deuxième portion 26b dans la rainure radiale 35 permet de réduire davantage l'encombrement radial au niveau du pivot 5 et permet de réaliser la connexion électrique de l'élément chauffant 26 et du boîtier de connexion 31 avant le montage des aubes de stator 2 sur le carter externe 8 de la turbomachine. La deuxième portion 26b de l'élément chauffant 26 se courbe vers l'horizontal au niveau de l'extrémité radialement externe 5a du pivot 5 avec un débord moindre. Cela participe à la facilité de mise en œuvre de la fixation des leviers 11 sur les pivots 5.

Les pivots 5 peuvent être montés chacun dans une douille cylindrique 37. Pour cela, chaque douille cylindrique 37 comprend un alésage 38 qui est coaxial à l'axe de calage A en situation d'installation. Chaque pivot 5 traverse l'alésage 38 correspondant. De manière avantageuse, mais non limitativement, il y a un jeu, entre le diamètre externe du pivot et le diamètre interne de la douille 37. Dans l'exemple représenté, chaque douille cylindrique 37 est formée de deux parties 37a, 37b. Bien entendu, chaque douille cylindrique 37 peut être formée en une seule pièce. Chaque partie 37a, 37b s'étend entre une première extrémité 39a et une deuxième extrémité 39b. Chaque partie comprend une collerette 40a, 40b qui s'étend radialement vers l'extérieur d'une des première et deuxième extrémités. Chaque douille cylindrique 37 est également montée dans le logement 7 du carter externe. De la sorte, la collerette 40a de la première partie 37a repose sur une surface externe de la paroi du carter externe 8 tandis que la collerette 40b de la deuxième partie repose sur une surface externe (opposée à la surface interne) de la platine 6. En variante, les douilles 37 sont dépourvues de collerette. La première extrémité 39a de la première partie 37a est située à une hauteur qui est supérieure à la hauteur de la sortie du perçage 34. En d'autres termes, la sortie du perçage 34 peut déboucher à l'intérieur de la partie de douille cylindrique 37. De la sorte, la deuxième portion 26b de l'élément chauffant 26 chemine entre la douille 37 et le pivot 5. En variante, la première extrémité 38a de la première partie 37a de douille cylindrique 37 est inférieure à la hauteur de la sortie 34a du perçage 34 de sorte que la sortie du perçage 34 débouche au-dessus de la collerette 40a. De la sorte, la deuxième portion 26b de l'élément chauffant 26 chemine radialement au-dessus de la douille 37.

En référence à la figure 3, chaque le levier 11 comprend avantageusement, mais non limitativement, un évidement 41 qui débouche sur une surface interne 23 du levier 11. Le premier trou 18 débouche dans cet évidement 41. En d'autres termes, l'évidement 41 est situé à la première extrémité 11a de chaque levier 11. Chaque évidement 41 forme une surface de butée 42 contre laquelle vient en butée la bordure 36 de l'extrémité radialement externe 5a du pivot 5. Chaque extrémité radialement externe 5a du pivot 5 est logée et entourée au moins en partie par l'évidement 41. Cela permet un meilleur centrage et maintien en position des pivots sur les leviers 11.

La figure 4 illustre un autre mode de réalisation de l'ensemble de turbomachine. Ce mode de réalisation diffère du mode de réalisation précédent en ce qu'un organe de support 45 est configuré de manière à porter et retenir le boîtier de connexion 31. Dans le cadre de cet exemple, chaque organe de support 45 est solidaire en rotation d'un des leviers 11. A cet effet, chaque organe de support 45 est fixé sur un levier 11 avec le même organe de fixation 14 situé au niveau de l'extrémité radialement externe 5a du pivot 5. Chaque organe de support 45 comprend par exemple un bras 46 dont une première extrémité 46a est fixée au levier 11. Le bras 46 comprend à une deuxième extrémité 46b opposée deux pans latéraux 47 qui sont en regard l'un de l'autre et à distance l'un de l'autre suivant la direction circonférentielle de manière à créer un espace. Chaque boîtier de connexion 31 repose sur le bras 46 et est disposé entre les deux pans latéraux 47. Avantageusement, chaque boîtier de connexion 31 est fixé au support 45 par exemple par clipsage ou collage. L'organe de support 45 permet de maintenir le boîtier de connexion fixe par rapport au levier 11. Les mouvements relatifs entre les boîtiers de connexion 31 et les éléments chauffants 26 sont ainsi supprimés. Cela permet d'éviter en fonctionnement toute reprise d'efforts par les éléments chauffants (première et deuxième portions) ou la connexion/fixation entre les éléments chauffants et les boîtiers de connexion qui sont tous deux fragiles.

Dans ce mode de réalisation, la première extrémité 11a du levier 11 comprend une surface externe 24 opposée radialement à la surface interne 23. La surface externe 24 est définie dans un premier plan s'étendant radialement au-dessus d'un deuxième plan dans lequel est définie la surface externe du reste du corps du levier 11. Ici, la deuxième extrémité 11b s'étend à distance et radialement au-dessous de l'organe de support 45. Cette configuration permet de faciliter la fixation de chaque levier 11 avec l'anneau de commande 10.

Sur la figure 4, nous pouvons voir également la deuxième portion 26b de l'élément chauffant en pointillé qui n'est pas encore reliée au boîtier de connexion 31 et la deuxième portion 26b reliée au boîtier de connexion 31. Lorsque la deuxième portion est connectée celle-ci forme une courbure et passe au-dessus de l'organe de fixation 14.

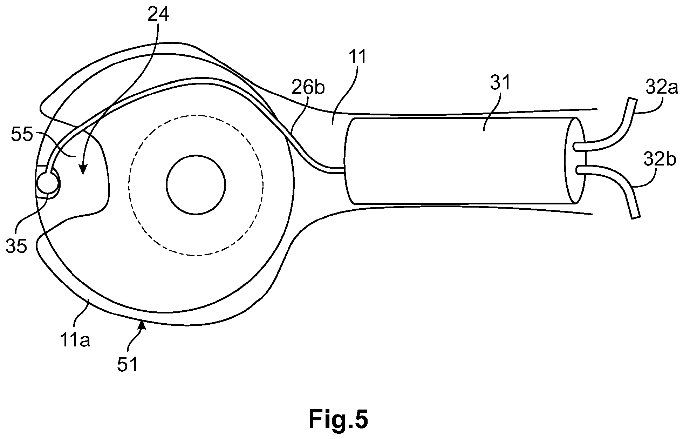

La figure 5 illustre un mode de réalisation d'un levier 11. Le levier 11 comprend une gorge 55 qui est destinée à recevoir au moins en partie la deuxième portion 26 de l'élément de chauffage 26. La gorge 55 traverse sa paroi de part et d'autre suivant l'axe radial. En d'autres termes, la gorge 55 débouche à la fois sur la surface externe 24 et la surface interne 23 qui sont opposées suivant l'axe radial. Dans le présent exemple, la surface externe 24 du levier 11 est définie dans un même plan, mais pourrait être définie dans deux plans parallèles différents. La gorge 55 débouche également sur une surface latérale périphérique 51 du levier 11. Avantageusement, cette dernière relie les surfaces externe et interne 23, 24. De manière avantageuse, la gorge 55 est ménagée au niveau de la première extrémité 11a du levier 11. La gorge 55 présente une section radiale en forme de U ou de C. Optionnellement, la gorge 55 est alignée ou sensiblement alignée avec la rainure 35 (l'axe de la rainure pouvant être parallèle à l'axe de la gorge 55). La mise en place de la gorge 55 sur le levier 11 permet d'améliorer encore davantage la réduction de l'encombrement du dispositif d'alimentation électrique et notamment de la deuxième portion 26b de l'élément chauffant 26.

## Revendications

1. Ensemble de turbomachine d'axe longitudinal (X), en particulier d'aéronef, comprenant :
- une aube de stator (2) à calage variable comportant une pale (4) et un pivot (5) s'étendant radialement depuis une extrémité (4c) de la pale (4), le pivot (5) comprenant un alésage principal (33),
- un système de changement de pas (3) configuré de manière à changer le calage de l'aube de stator (2) autour de son axe de calage (A), et
- un élément chauffant (26) comprenant une première portion (26a) montée au sein de la pale (4) et une deuxième portion (26b), s'étendant à l'extérieur de la pale (4), reliée à un dispositif de connexion (29) électrique,
**caractérisé en ce que** le pivot (5) comprend un perçage (34) qui traverse la paroi du pivot (5) de manière à déboucher d'une part, dans l'alésage principal (33) et d'autre part, sur une surface externe (5c) du pivot (5), et une rainure radiale (35) ménagée dans la paroi du pivot (5) qui débouche sur la surface externe (5c) et dans une sortie du perçage (34), la deuxième portion (26b) prolongeant la première portion (26a) et la deuxième portion (26b) s'étendant dans l'alésage principal (33), dans le perçage (34), puis dans la rainure radiale (35) vers le dispositif de connexion électrique.

2. Ensemble selon la revendication précédente, **caractérisé en ce que** le dispositif de connexion (29) électrique comprend au moins un boîtier de connexion (31) et au moins harnais (32a, 32b) qui est couplé à la première portion (26a) de l'élément chauffant (26) via le boîtier de connexion (31) et à une source d'alimentation électrique (30), le harnais (32a, 32b) s'étendant à l'extérieur du pivot (5).

3. Ensemble selon l'une des revendications précédentes, **caractérisé en ce que** le système de changement de pas (3) comprend un anneau de commande (10) et au moins un levier (11) qui est solidarisé à une extrémité radialement externe du pivot (5) au moyen d'au moins un organe de fixation (14) et relié à l'anneau de commande (10) qui est destiné à être déplacé en rotation autour de l'axe longitudinal X et à entraîner le changement de calage des aubes de stator (2).

4. Ensemble selon la revendication précédente, **caractérisé en ce qu'**il comprend un organe de support (45) solidaire en rotation du levier (11) et qui est configuré de manière à porter et retenir le boîtier de connexion (31).

5. Ensemble selon la revendication précédente, **caractérisé en ce que** l'organe de support (45) est fixé sur le levier (11) avec le même organe de fixation (14).

6. Ensemble selon l'une quelconque des revendications 3 à 4, **caractérisé en ce que** le levier (11) comprend une gorge (55) traversant sa paroi de part et d'autre radialement au niveau de sa première extrémité (11a) et qui est destinée à recevoir au moins en partie la deuxième portion (26b) de l'élément chauffant (26).

7. Ensemble selon la revendication précédente, **caractérisé en ce qu'**il comprend une douille cylindrique (37) pourvue d'un alésage (38) destiné à être traversé par le pivot (5), la deuxième portion (26b) de l'élément chauffant (26) cheminant au-dessus radialement de la douille cylindrique (37).

8. Ensemble selon la revendication 6, **caractérisé en ce qu'**il comprend une douille cylindrique (37) pourvue d'un alésage (38) destiné à être traversé par le pivot (5), la deuxième portion (26b) de l'élément chauffant (26) cheminant entre la douille cylindrique (37) et le pivot (5).

9. Ensemble selon l'une quelconque des revendications précédentes, **caractérisé en ce qu'**il comprend une pluralité d'aubes de stator (2) à calage variable disposées autour de l'axe longitudinal (X), chacun des pivots (5) étant reliés à l'anneau de commande (10), et **en ce que** le dispositif de connexion (29) comprenant plusieurs boîtiers de connexion (31) reliant électriquement chacun une deuxième portion (26b) d'un élément chauffant (26) et au moins deux harnais, chaque harnais étant relié à un autre harnais d'un des boîtiers de connexion (31) via un connecteur (50).

10. Ensemble selon l'une quelconque des revendications précédentes, **caractérisé en ce que** l'alésage principal (33) s'étend coaxialement à l'axe de calage des aubes de stator.

11. Ensemble selon l'une quelconque des revendications 1 à 10, **caractérisé en ce que** l'alésage principal (33) s'étend de manière inclinée par rapport à l'axe radial.

12. Ensemble selon l'une quelconque des revendications 1 à 11, **caractérisé en ce que** l'alésage principal (33) s'étend parallèlement à l'axe de calage.

13. Turbomachine (1) comprenant un ensemble selon l'une quelconque des revendications précédentes.

## Patentansprüche

1. Turbotriebwerk-Baugruppe mit Längsachse (X), insbesondere für ein Luftfahrzeug, umfassend:
- eine Statorschaufel (2) mit variabler Feststellposition, umfassend ein Blatt (4) und ein Drehgelenk (5), das sich ab einem Ende (4c) des Blatts (4) radial erstreckt, wobei das Drehgelenk (5) eine Hauptbohrung (33) umfasst,
- ein Steigungsänderungssystem (3), das auf eine Weise konfiguriert ist, um die Feststellposition der Statorschaufel (2) um ihre Feststellachse (A) herum zu ändern, und
- ein mit einer elektrischen Verbindungsvorrichtung (29) verbundenes Heizelement (26), umfassend einen ersten Abschnitt (26a), der innerhalb des Blatts (4) montiert ist, und einen zweiten Abschnitt (26b), der sich an der Außenseite des Blatts (4) erstreckt,
**dadurch gekennzeichnet, dass** das Drehgelenk (5) eine Durchbohrung (34), die die Wand des Drehgelenks (5) auf eine Weise durchquert, um einerseits in der Hauptbohrung (33) und andererseits auf einer externen Oberfläche (5c) des Drehgelenks (5) zu münden, und eine radiale Nut (35) umfasst, die in der Wand des Drehgelenks (5) ausgebildet ist, die auf der externen Oberfläche (5c) und in einem Ausgang der Durchbohrung (34) mündet, wobei der zweite Abschnitt (26b) den ersten Abschnitt (26a) verlängert und der zweite Abschnitt (26b) sich in der Hauptbohrung (33), in der Durchbohrung (34), danach in der radialen Nut (35) in Richtung der elektrischen Verbindungsvorrichtung erstreckt.

2. Baugruppe nach dem vorstehenden Anspruch, **dadurch gekennzeichnet, dass** die elektrische Verbindungsvorrichtung (29) mindestens ein Anschlussgehäuse (31) und mindestens einen Kabelbaum (32a, 32b) umfasst, der über das Anschlussgehäuse (31) mit dem ersten Abschnitt (26a) des Heizelements (26) und mit einer Quelle (30) zur elektrischen Versorgung gekoppelt ist, wobei sich der Kabelbaum (32a, 32b) an der Außenseite des Drehgelenks (5) erstreckt.

3. Baugruppe nach einem der vorstehenden Ansprüche, **dadurch gekennzeichnet, dass** das Steigungsänderungssystem (3) einen Verstellring (10) und mindestens einen Hebel (11) umfasst, der mit einem radial externen Ende des Drehgelenks (5) mittels mindestens eines Fixierungselements (14) befestigt und mit dem Verstellring (10) verbunden ist, der dazu bestimmt ist, um um die Längsachse X herum rotierend bewegt zu werden und die Änderung der Feststellposition der Statorschaufeln (2) anzutreiben.

4. Baugruppe nach dem vorstehenden Anspruch, **dadurch gekennzeichnet, dass** sie ein Stützelement (45) umfasst, das mit dem Hebel (11) drehfest ist und das auf eine Weise konfiguriert ist, um das Anschlussgehäuse zu tragen und zu halten.

5. Baugruppe nach dem vorstehenden Anspruch, **dadurch gekennzeichnet, dass** das Stützelement (45) an dem Hebel (11) mit dem gleichen Fixierungselement (14) fixiert ist.

6. Baugruppe nach einem der Ansprüche 3 bis 4, **dadurch gekennzeichnet, dass** der Hebel (11) eine Ausnehmung (55) umfasst, die seine Wand auf Höhe seines ersten Endes (11a) beiderseits radial durchquert und die dazu bestimmt ist, den zweiten Abschnitt (26b) des Heizelements (26) mindestens zum Teil aufzunehmen.

7. Baugruppe nach dem vorstehenden Anspruch, **dadurch gekennzeichnet, dass** sie eine zylindrische Hülse (37) umfasst, die mit einer Bohrung (38) versehen ist, die dazu bestimmt ist, von dem Drehgelenk (5) durchquert zu werden, wobei der zweite Abschnitt (26b) des Heizelements (26) über der zylindrischen Hülse (37) radial verläuft.

8. Baugruppe nach Anspruch 6, **dadurch gekennzeichnet, dass** sie eine zylindrische Hülse (37) umfasst, die mit einer Bohrung (38) versehen ist, die dazu bestimmt ist, von dem Drehgelenk (5) durchquert zu werden, wobei der zweite Abschnitt (26b) des Heizelements (26) zwischen der zylindrischen Hülse (37) und dem Drehgelenk (5) verläuft.

9. Baugruppe nach einem der vorstehenden Ansprüche, **dadurch gekennzeichnet, dass** sie eine Vielzahl von Statorschaufeln (2) mit variabler Feststellposition umfasst, die um die Längsachse (X) herum angeordnet sind, wobei jedes der Drehgelenke (5) mit dem Verstellring (10) verbunden ist, und dadurch, dass die Verbindungsvorrichtung (29) mehrere Anschlussgehäuse (31) umfasst, die jeweils einen zweiten Abschnitt (26b) eines Heizelements (26) und mindestens zwei Kabelbäume verbinden, wobei jeder Kabelbaum über ein Verbindungsstück (50) mit einem anderen Kabelbaum eines der Anschlussgehäuse (31) verbunden ist.

10. Baugruppe nach einem der vorstehenden Ansprüche, **dadurch gekennzeichnet, dass** sich die Hauptbohrung (33) koaxial zu der Feststellachse der Statorschaufeln erstreckt.

11. Baugruppe nach einem der Ansprüche 1 bis 10, **dadurch gekennzeichnet, dass** sich die Hauptbohrung (33) in Bezug auf die radiale Achse auf eine geneigte Weise erstreckt.

12. Baugruppe nach einem der Ansprüche 1 bis 11, **dadurch gekennzeichnet, dass** sich die Hauptbohrung (33) parallel zu der Feststellachse erstreckt.

13. Turbotriebwerk (1), umfassend eine Baugruppe nach einem der vorstehenden Ansprüche.

## Claims

1. An assembly of a turbine engine having a longitudinal axis (X), in particular for an aircraft, comprising:
- a variable pitch stator vane (2) comprising a blade (4) and a pivot (5) extending radially from one end (4c) of the blade (4), the pivot (5) comprising a main bore (33),
- a pitch change system (3) configured to change the pitch of the stator vane (2) about its pitch axis (A), and
- a heating element (26) comprising a first portion (26a) mounted within the blade (4) and a second portion (26b), extending outside the blade (4), connected to an electrical connection device (29),
**characterized in that** the pivot (5) comprises a drilled hole (34) which passes through the wall of the pivot (5) so as to open, on the one hand, into the main bore (33) and, on the other hand, onto an external surface (5c) of the pivot (5), and a radial groove (35) formed in the wall of the pivot (5) which opens onto the external surface (5c) and into an outlet of the drilled hole (34), the second portion (26b) continuing the first portion (26a) and the second portion (26b) extending into the main bore (33), into the drilled hole (34), and then into the radial groove (35) towards the electrical connection device.

2. The assembly according to the preceding claim, **characterized in that** the electrical connection device (29) comprises at least one connection box (31) and at least one harness (32a, 32b) which is coupled to the first portion (26a) of the heating element (26) via the connection box (31) and to a source of electrical power supply (30), the harness (32a, 32b) extending outside the pivot (5).

3. The assembly according to one of the preceding claims, **characterised in that** the pitch change system (3) comprises a control ring (10) and at least one lever (11) which is secured to a radially external end of the pivot (5) by means of at least one fastening member (14) and connected to the control ring (10) which is configured to be rotated about the longitudinal axis X and to bring about the change in pitch of the stator vanes (2).

4. The assembly according to the preceding claim, **characterised in that** it comprises a support member (45) rotationally secured to the lever (11) and which is configured so as to carry and retain the connection box (31).

5. The assembly according to the preceding claim, **characterized in that** the support member (45) is fixed to the lever (11) with the same fastening member (14).

6. The assembly according to any one of claims 3 to 4, **characterised in that** the lever (11) comprises a channel (55) passing through its wall on either side radially at its first end (11a) and which is configured to receive at least part of the second portion (26b) of the heating element (26).

7. The assembly according to the preceding claim, **characterized in that** it comprises a cylindrical socket (37) provided with a bore (38) configured to be passed through by the pivot (5), the second portion (26b) of the heating element (26) running radially above the cylindrical socket (37).

8. The assembly according to claim 6, **characterized in that** it comprises a cylindrical socket (37) provided with a bore (38) configured to be passed through by the pivot (5), the second portion (26b) of the heating element (26) travelling between the cylindrical socket (37) and the pivot (5).

9. The assembly according to any one of the preceding claims, **characterized in that** it comprises a plurality of stator vanes (2) with variable pitch arranged about the longitudinal axis (X), each of the pivots (5) being connected to the control ring (10), and **in that** the connection device (29) comprises several connection boxes (31) each electrically connecting a second portion (26b) of a heating element (26) and at least two harnesses, each harness being connected to another harness of one of the connection boxes (31) via a connector (50).

10. The assembly according to any one of the preceding claims, **characterized in that** the main bore (33) extends coaxially with the pitch axis of the stator vanes.

11. The assembly according to any one of claims 1 to 10, **characterised in that** the main bore (33) extends at an angle to the radial axis.

12. The assembly according to any one of claims 1 to 11, **characterized in that** the main bore (33) extends parallel to the pitch axis.

13. A turbine engine (1) comprising an assembly according to any one of the preceding claims.
